# EUROPÄISCHE PATENTSCHRIFT

(11) **EP 0 478 917 B1**
(45) Veröffentlichungstag und Bekanntmachung des Hinweises auf die Patenterteilung: **25.05.1994**
(21) Anmeldenummer: 91112627.4
(22) Anmeldetag: 26.07.1991
(51) Int. Cl.: F16D 65/56

(54) **Automatische Nachstelleinrichtung für eine mechanisch betätigte Gleitsattel-Scheibenbremse**
Automatic adjuster for a mechanical actuated disc brake with floating caliper
Dispositif de rattrapage automatique de jeu pour un frein à disque à étrier flottant à commande mécanique

(30) Priorität: 05.10.1990 DE 4031616
(43) Veröffentlichungstag der Anmeldung: 08.04.1992
(73) Patentinhaber: DEUTSCHE PERROT-BREMSE GmbH, 68229 Mannheim (DE)
(72) Erfinder: Paul, Antony, Dipl.-Ing., W-6842 Bürstadt (DE)
(74) Vertreter: Patentanwälte Leinweber & Zimmermann

(56) Entgegenhaltungen:
- EP-A- 0 271 864
- DE-A- 3 445 563
- DE-A- 3 814 475
- DE-A- 3 841 593
- DE-C- 2 560 024
- DE-C- 3 005 420

## Beschreibung

Die Erfindung betrifft eine automatische Nachstelleinrichtung für eine mechanisch betätigte Scheibenbremse mit einem quer zur Bremsscheibe schiebbar gelagerten Gleitsattel, der mit seinen beiden, jeweils einen Bremsbelagträger mit Bremsbelag aufweisenden Sattelhälften die Bremsscheibe übergreift, mit einer in einer Sattelhälfte drehbar gelagerten Betätigungswelle, die an ihrem büchsenförmig auslaufenden Ende einen radial vorstehenden Bund aufweist, der an seiner einen Seite mit Schräglaufbahnen zur Aufnahme von Kugeln versehen ist, die mit Schräglaufbahnen an einem Lagerring korrespondieren und dazu dienen, die Drehbewegung der Betätigungswelle in eine axiale Bewegung einer mit dem Kolben drehfest verbundenen Druckschraube umzuwandeln, wobei sich die Betätigungswelle zur Sicherung gegen axiale Verschiebung auf derjenigen Seite des Bundes, die von den Schräglaufbahnen abgewandt ist, über ein Axiallager am Gleitsattel abstützt, der Lagerring in Bezug auf den Bremssattel axial verschiebbar, jedoch gegen Drehung gesichert ist und sich an einer hülsenförmig ausgebildeten Nachstellmutter abstützt, in die die Druckschraube eingeschraubt ist und die mit einem Verlängerungsstück drehfest verbunden ist, das die Betätigungswelle koaxial durchsetzt, einem Nachstellring, der relativ zum Verlängerungsstück der Nachstellmutter drehbar gelagert ist, wobei der Nachstellring oder die Betätigungswelle einen radialen Zapfen aufweist, der in eine Nut der Betätigungswelle oder des Nachstellrings eingreift, einer Nachstellhülse, die auf dem Verlängerungsstück angeordnet ist, wobei der Nachstellring und die Nachstellhülse an den einander zugekehrten Stirnseiten Schrägverzahnungen aufweisen, wobei sich eines der beiden eine Schrägverzahnung aufweisenden Nachstellteile an einem Bund der Nachstellmutter abstützt, mit einem Federbauteil, das sich an dem anderen Nachstellteil abstützt, um die beiden Schrägverzahnungen in Eingriff zu halten, mit einer in dem Kraftfluß vom Nachstellring zu der Nachstellmutter angeordneten Richtungskupplung, die beim Verdrehen der Betätigungswelle in Bremsbetätigungsrichtung wirksam ist, und mit einer Drehmomentbegrenzungseinrichtung, die das vom Nachstellring auf die Nachstellmutter übertragbare Drehmoment begrenzt.

Eine in der DE-OS 38 14 475 beschriebene Nachstelleinrichtung dieser Gattung stellt einen Verschleiß der Bremsbeläge stufenweise durch ein axial verschiebbares Sägezahngesperre nach. Das Lüftspiel wird somit durch die gewählte Zahnteilung bestimmt. Eine Verringerung des Lüftspiels durch eine sehr klein gehaltene Zahnteilung ist aber aus fertigungstechnischen Gründen nicht möglich.

Somit ist zur Überwindung des Lüftspiels ein entsprechend großer Betätigungshub (Leerhub) der Bremsbetätigung erforderlich, wodurch sich auch eine Verringerung der Reserve des Betätigungsweges bemerkbar machen kann. Die Größe des Betätigungshubes wird aber auch durch die Steigung der Schräglaufbahnen am Lagerring und an der Betätigungswelle bestimmt. Eine kleine Steigung erfordert für die Spreizung einen relativ großen Betätigungshub. Eine Vergrößerung der Steigung, die eine schnellere Anlage der Bremsbacken an der Bremsscheibe bei einer Verringerung des Betätigungshubes zur Folge hat, erfordert aufgrund kleinerer Übersetzungen größere Betätigungszylinder, um die gleiche Bremswirkung zu erzielen.

In der Praxis ist man bestrebt, über ein fast gegen Null gehendes Lüftspiel den Betätigungshub durch einen minimalen Leerhub zu verringern, um dadurch eine schnellere Anlage der Bremsbacken an der Bremsscheibe zu erreichen und letztendlich die Betätigungswegreserve für Not- und Vollbremsungen zu vergrößern. Diese Anforderung wird hauptsächlich dann gestellt, wenn derartige Scheibenbremsen in modernen ABS-Bremsanlagen wirkungsvoll eingesetzt werden sollen, d.h. geringerer Luftverbrauch pro Bremsung, schnellere Füllzeiten der Betätigungszylinder und damit kürzere Schwellzeiten der gesamten Bremsanlage. Bei gleicher Gesamtübersetzung des Betätigungsmechanismus erfolgt dann aufgrund kleinerer Leerhübe eine schnellere Anlage der Bremsbeläge.

Diese Anforderung kann nur eine stufenlos einstellende Nachstelleinrichtung erfüllen, die zudem noch kraftabhängig wirkt. Weiterhin soll mit der erfindungsgemäßen Nachstelleinrichtung eine deutliche Vereinfachung gegenüber dem Stand der Technik erreicht und eine Verringerung der Anzahl der erforderlichen Nachstellteile erzielt werden. Die erfindungsgemäße Nachstelleinrichtung soll auch eine einfachere Rückstellung ermöglichen, wobei einerseits Rattererscheinungen beim schnellen Überspringen der Schrägverzahnung vermieden werden und andererseits die Verwendung eines als reibschlüssige Kupplung wirkenden Toleranzringes umgangen wird, der infolge von Schwankungen des Reibwertes die Rückstellung erschwert.

Erfindungsgemäß wird diese Aufgabe dadurch gelöst, daß die Nachstellhülse auf dem Verlängerungsstück der Nachstellmutter drehbar gelagert ist und sich an einem Bund derselben abstützt, daß sich das Federbauteil am Nachstellring abstützt, daß die Nachstellhülse über eine Nachstellkupplung mit der Nachstellmutter verbunden ist, daß die in dem Nachstellring oder in der Betätigungswelle ausgebildete Nut eine Axialnut ist und daß die an den Stirnseiten der Nachstellhülse und des Nachstellrings angeordneten Schrägverzahnungen in Bremsbetätigungsrichtung unter Kompression des Federbauteils ein gegenseitiges Überspringen ermöglichen.

Zweckmäßige Weiterbildungen der Erfindung ergeben sich aus den Unteransprüchen.

Einige Ausführungsbeispiele der Erfindung sind in den Zeichnungen dargestellt und werden nachfolgend näher erläutert. Es zeigen:
Fig. 1 einen achsparallelen Schnitt durch eine Gleitsattel-Scheibenbremse,
Fig. 2 einen Querschnitt nach der Linie II-II in Fig. 1,
Fig. 3 einen Schnitt ähnlich wie Fig. 1 durch eine abgewandelte Ausführungsform
Fig. 4 einen Querschnitt nach der Linie IV-IV in Fig. 3, und
Fig. 5 einen Schnitt ähnlich wie Fig. 1 durch noch eine andere Ausführungsform.

Wie aus der Zeichnung ersichtlich, umfaßt die veranschaulichte Gleitsattel-Scheibenbremse einen Gleitsattel 1, der mit seinen beiden Sattelhälften 4 bzw. 5 die strichpunktiert angedeutete Bremsscheibe 6 übergreift. Die beiden Sattelhälften weisen jeweils einen Bremsbelagträger 2 auf, der einen der Bremsscheibe 6 zugekehrten Bremsbelag 3 trägt.

In der Sattelhälfte 5 des Gleitsattels 1 ist eine Betätigungswelle 7 über einen (nicht gezeigten) Hebel drehbar gelagert. Diese Betätigungswelle 7 läuft in ein büchsenförmiges Ende mit einem radial vorstehenden Bund 9 aus. Dieser Bund 9 ist an seiner dem Hebel abgewandten Seite mit mindestens zwei, vorzugsweise drei Schräglaufbahnen 10 zur Aufnahme von Kugeln 11 versehen, die andererseits in entsprechenden Schräglaufbahnen 12 an einem Lagerring 13 laufen. Die miteinander korrespondierenden Schräglaufbahnen 10 und 12 sind derart in Bezug zueinander am Bund 9 bzw. am Lagerring 13 angeordnet, daß eine Drehung der Betätigungswelle 7 in eine axiale Bewegung des Lagerrings 13 und einer Nachstellmutter 14 umgewandelt wird. In diese Nachstellmutter 14 ist eine Druckschraube 15 eingeschraubt, die mit einem gegen eine Verdrehung gesicherten Kolben 21 drehfest verbunden ist. Zur Übertragung axialer Kräfte vom Lagerring 13 auf die Nachstellmutter 14 ist letztere mit einer radial vorstehenden Schulter 17 versehen, an der sich der Lagerring 13 abstützt.

Damit sich der Lagerring 13 unter der Wirkung der Betätigungswelle 7 axial verschieben kann, ohne an der Drehung der Betätigungswelle 7 teilzunehmen, ist eine Drehsicherung in Form einer achsparallelen Führungsnut 18 vorgesehen, in die ein den Kolben 21 ebenfalls in einer Nut 22 durchsetzender Führungszapfen 19 eingreift. Dieser Führungszapfen 19 ist durch das stirnseitig vorstehende Ende eines in eine radiale Gewindebohrung des Gleitsattels 1 eingeschraubten Schraubbolzens 20 gebildet.

Eine Ringmanschette 26 aus elastischem Kunststoff, die sich zwischen dem Gleitsattel 1 und dem Kolben 21 erstreckt, schützt den Betätigungsmechanismus gegen eindringende Fremdkörper, Schmutz und Feuchtigkeit.

Auf der den Schräglaufbahnen 10 abgewandten rückwärtigen Seite des Bundes 9 ist ein Axiallager 27 vorgesehen, über das sich die Betätigungswelle 7 am Gleitsattel 1 abstützt.

Die Nachstellmutter 14 ist mit einem Verlängerungsstück 24 drehfest verbunden. Auf dem Verlängerungsstück 24 sind eine Nachstellhülse 28 und ein Nachstellring 29 drehbar angeordnet, deren einander zugekehrte Stirnflächen eine Schrägverzahnung 30 aufweisen. Die beiden Nachstellteile 28 und 29 werden durch eine sich am Verlängerungsstück 24 abstützende Druckfeder 23 in Anlage gehalten, da sich die Nachstellhülse 28 gegen den Absatz an der Nachstellmutter 14 anlegt.

Die Schrägverzahnung 30 könnte auch durch eine reibschlüssige Kupplung ersetzt werden. Vorzugsweise findet aber eine sehr klein gehaltene Schrägverzahnung Anwendung, da reibschlüssige Kupplungen infolge Schwingungen oder Erschütterungen zu einem ungewollten Trennen neigen.

In eine Axialnut 31 des Nachstellrings 29 greift ein in der Betätigungswelle 7 befestigter Zapfen 32 ein. Das Spiel L stellt dabei das Lüftspiel dar. Das Spiel kann aber auch entfallen, wenn sich das sehr klein angestrebte Lüftspiel allein schon aus den Herstellungstoleranzen der Bremsenteile ergibt.

Durch eine weitere Druckfeder 25, die sich sowohl an der Betätigungswelle 7 als auch am Verlängerungsstück 24 der Nachstellmutter 14 abtützt, wird die Schulter 17 der Nachstellmutter 14 am Lagerring 13 in Anlage gebracht und damit die Spreizeinrichtung 9,11,13 an den Kugelführungen 10,12 spielfrei gehalten.

Auf den Umfangsflächen der Nachstellmutter 14 und der Nachstellhülse 28 ist beidseitig an einem Bund anliegend eine diese beiden Teile verbindende Schlingfeder 33 angeordnet. Diese Schlingfeder 33 liegt mit ihrem zylindrisch gewundenen Federkörper unter radialer Vorspannung an den Umfangsflächen der Nachstellteile 14,28 an und bildet eine Richtungskupplung. Bei Bremsbetätigung überträgt diese Richtungskupplung ein Drehmoment von der Nachstellhülse 28 auf die Nachstellmutter 14, und beim Lösen der Bremse rutscht sie wie ein Freilauf durch.

Die nachgeordnete kraftabhängige Kupplung wird durch die Schrägverzahnungen 30 oder andernfalls durch eine reibschlüssige Kupplung zwischen den Nachstellteilen 28 und 29 hergestellt.

Die kraftabhängige Nachstellung arbeitet folgendermaßen:

Wenn die Betätigungswelle 7 beim Bremsvorgang in Richtung des Pfeils bewegt wird, dann verdreht deren in die Axialnut 31 des Nachstellrings 29 spielfrei oder mit einem Spiel L eingreifender Zapfen 32 infolge der Vorspannung der Druckfeder 23 über die Schrägverzahnungen 30 oder über eine Reibkupplung die Nachstellhülse 28. Durch die Schlingfeder 33 wird diese Bewegung der Nachstellteile 28,29 sofort auf die Nachstellmutter 14 übertragen. Dabei ist das Drehmoment größer als das Reibmoment zwischen der Schulter 17 der Nachstellmutter 14 und dem Lagerring 13, das sich über die zweite Druckfeder 25 einstellt. Durch die Drehung der Nachstellmutter 14 gegenüber der Druckschraube 15 wird das Lüftspiel nachgestellt.

Sobald die Bremsbeläge 3 an der Bremsscheibe 6 anliegen, vergrößert sich die aus der Zuspannkraft resultierende Reibung zwischen der Schulter 17 und dem Lagerring 13 und übersteigt damit das über die Schrägverzahnungen 30 übertragbare Drehmoment. Wenn die Betätigungswelle 7 weiter in Betätigungsrichtung gedreht wird, dann wird die Nachstellmutter 14 von dem stark ansteigenden Reibmoment am Lagerring 13 festgehalten, und der Nachstellring 29 rutscht gegen die Vorspannkraft der Druckfeder 23 über die kraftabhängig wirkende Schrägverzahnung 30 oder über eine reibschlüssige Reibverbindung gegenüber der Nachstellhülse 28 durch, und eine weiter Nachstellung wird somit unterbunden.

Der unter Verspannung der Bremse zurückgelegte Anteil des Betätigungsweges, der zu einer elastischen Verformung der Bremse führt, wird somit bei der Nachstellung nicht berücksichtigt.

Beim Lösen der Bremse drückt die Vorspannkraft der Druckfeder 23 die Nachstellteile 28,29 gegeneinander, und der Zapfen 32 dreht infolge der Lösebewegung der Betätigungswelle 7 diese Teile 28,29 entsprechend dem Verschleiß der Bremsbeläge zurück. Die Nachstellmutter 14 wird dabei nicht mit zurückgedreht, weil sie über die zweite Druckfeder 25 an dem Lagerring 13 in Anlage gehalten wird und weil außerdem die Schlingfeder 33 bei der Lösebewegung als Freilauf wirkt.

Beim folgenden Bremsvorgang wird der Belagverschleiß wie beschrieben wieder nachgestellt.

Der Lösevorgang, der bei Erneuerung der Bremsbeläge und bei einer neuen Grundeinstellung erforderlich wird, ist überaus einfach. Zu diesem Zweck wird die Nachstellmutter 14 über einen am Verlängerungsstück 24 angreifenden Schlüssel in Sperrichtung der Schlingfeder 33 zurückgedreht, wobei die Zähne der Schrägverzahnungen 30 einander überspringen.

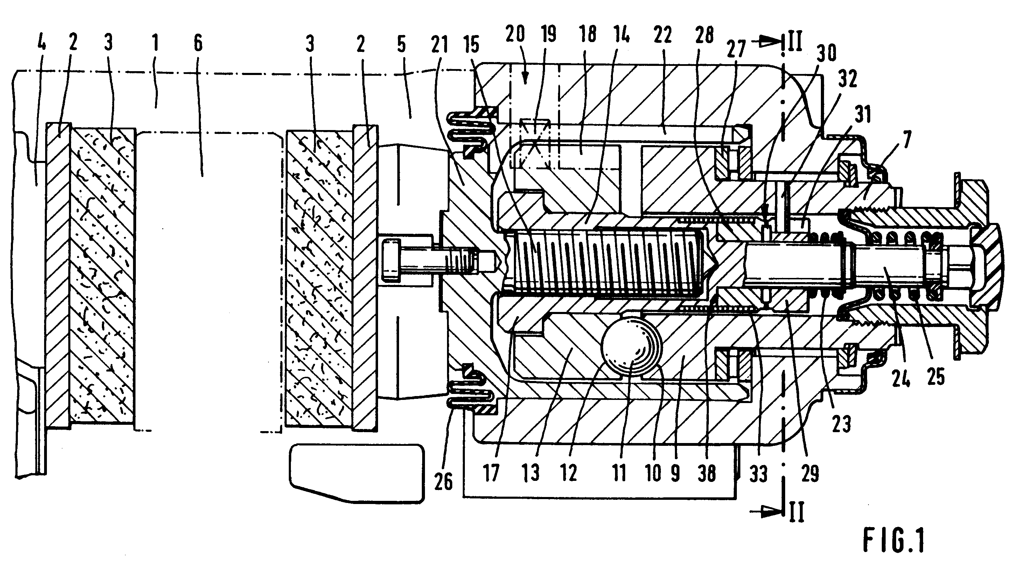

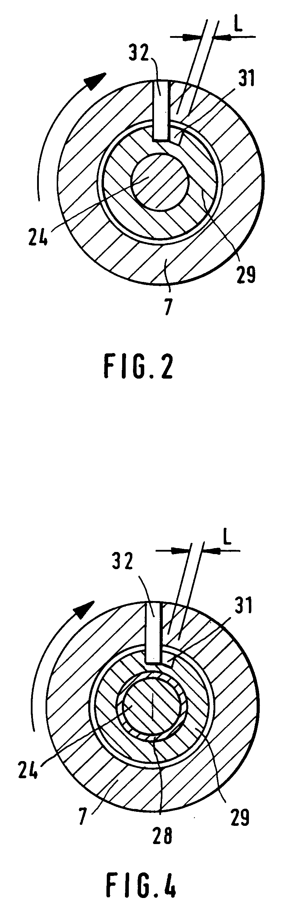

Bei der in den Fig. 1 und 2 gezeigten Ausführungsform ist es unter bestimmten Bedingungen - z.B. Fettverhärtung infolge tiefer Temperaturen - möglich, daß sich zwischen den Anlagestirnflächen 38 der Nachstellmutter 14 und der Nachstellhülse 28 durch die Vorspannkraft der Druckfeder 23 eine zu große Haftreibung einstellt.

Dies kann dazu führen, daß nach einer Bremsbetätigung, also wenn die Betätigungswelle 7 beim Lösen der Bremse in ihre Ausgangsstellung zurückgeht, infolge der vorstehend genannten Haftreibung die Nachstellmutter 14 trotz Leerlaufrichtung der einsinnigen Kupplungen 33 oder 34 unerwünscht wieder mit den Nachstellteilen 28 und 29 zurückgedreht wird, wodurch der während der Bremsbetätigung vorangegangene Nachstellschritt wieder aufgehoben ist.

Um dies zu vermeiden, muß die durch die Vorspannkraft der Druckfeder 25 bewirkte Haftreibung zwischen den Anlagestirnflächen der Teile 13,17 größer sein als die Haftreibung, die durch die Druckfeder 23 zwischen den Teilen 14 und 28 eingestellt wird.

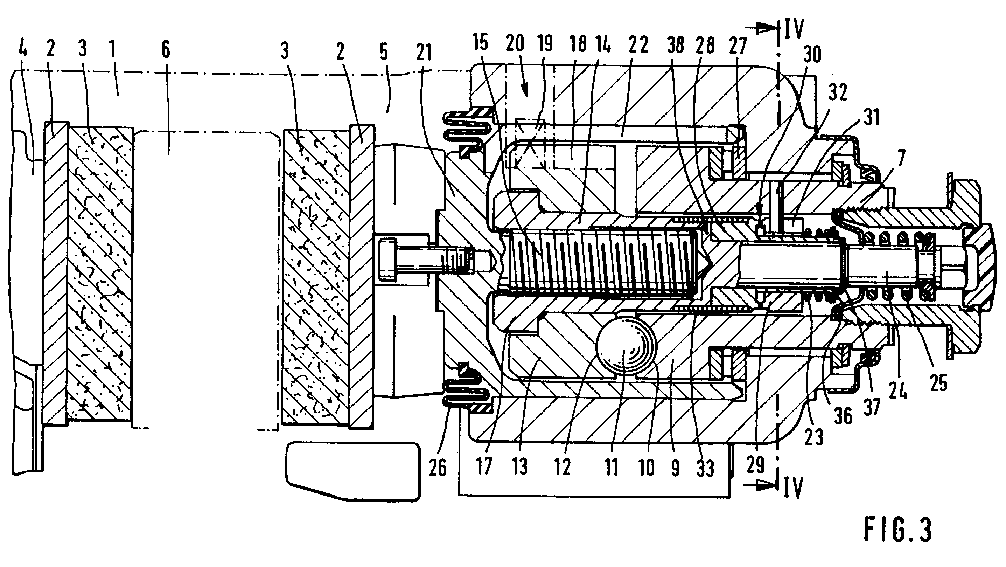

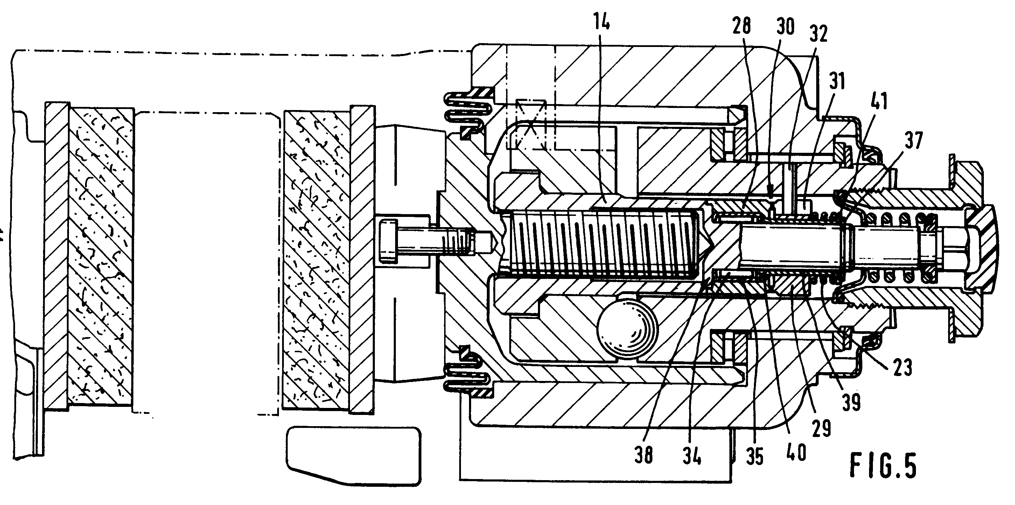

Um die axiale Haftreibung zwischen den Stirnflächen 38 der Teile 14,28 gegen ein ungewolltes Rückdrehen der Nachstellmutter 14 nach einer Bremsbetätigung vollkommen auszuschalten, ist die in den Fig. 3 und 4 gezeigte Weiterbildung vorgesehen. Bei dieser bevorzugten Ausführungsform ist die Nachstellhülse 28 mit einer Verlängerung versehen, auf der drehbar und axial verschiebbar der Nachstellring 29 sitzt. Dieser wird durch die Druckfeder 23 beaufschlagt, die sich ihrerseits über eine Scheibe an dem Sicherungsring 36 auf dem Verlängerungsstück 24 der Nachstellmutter 14 abstützt. Dadurch wird die Schrägverzahnung 30 der kraftabhängigen Kupplung in Eingriff gehalten. Die Nachstellhülse 28 selbst ist gegen axiale Verschiebung auf dem Verlängerungsstück 24 der Nachstellmutter 14 durch einen festen Anschlag 37 positioniert.

Somit wird die Nachstellhülse 28 ohne Federvorspannung, jedoch mit geringem Spiel, in ihrer Anlage zwischen der Stirnfläche 38 der Nachstellmutter 14 und dem festen Anschlag 37 festgelegt. Die vorstehend erläuterte unerwünschte axiale Haftreibung infolge einer Federvorspannung ist somit zwischen den Teilen 14 und 28 ausgeschaltet.

Nach Beendigung der Bremsbetätigung, also in Bremslöserichtung können die Nachstellteile 28 und 29 mit der Betätigungswelle 7 in Freilaufrichtung der einsinnigen Kupplung 33 verdreht werden, ohne daß eine ungewollte Mitnahme der Nachstellmutter 14 in diese Richtung erfolgt.

Bei der in Fig. 5 gezeigten abgewandelten Ausführungsform entfällt die Schlingfeder 33, die als Richtungskupplung zur Drehmomentübertragung zwischen der Nachstellmutter 14 und der Nachstellhülse 28 wirkt.

Die Aufgabe und die Funktion der Schlingfeder 33 wird bei dieser Variante ersetzt durch den Einsatz eines Hülsenfreilaufs 34, der ebenfalls als Richtungskupplung zur Drehmomentübertragung zwischen der Nachstellmutter 14 und der Nachstellhülse 28 dient. Dabei sitzt der Außenring 35 des Hülsenfreilaufs 34 am Innenumfang der Nachstellhülse 28, und der Innenring des Hülsenfreilaufs 34 sitzt über sein Nadellager auf dem Außenumfang des Verlängerungsstückes 24 der Nachstellmutter 14.

Auch bei dieser Ausführungsform ist gewährleistet, daß keine Haftreibung zwischen der Nachstellhülse 28 und der Nachstellmutter 14 auftritt. Zu diesem Zweck sitzt der Nachstellring 29 auf einer Hülse 39. Diese weist zwei radial sich nach außen erstreckende Bunde auf, wobei der eine Bund 40 einen radial nach innen weisenden Bund der Nachstellhülse 28 hintergreift und der andere Bund 41 als Abstützung für die Druckfeder 23 und als Anlage am festen Anschlag 37 dient. Somit sind zwar die Nachstellteile 28 und 29 untereinander verspannt, jedoch stellt sich über die Druckfeder 23 zwischen den Nachstellteilen und der Nachstellmutter 14 keine axiale Haftreibung ein.

### Bezugszeichenliste:

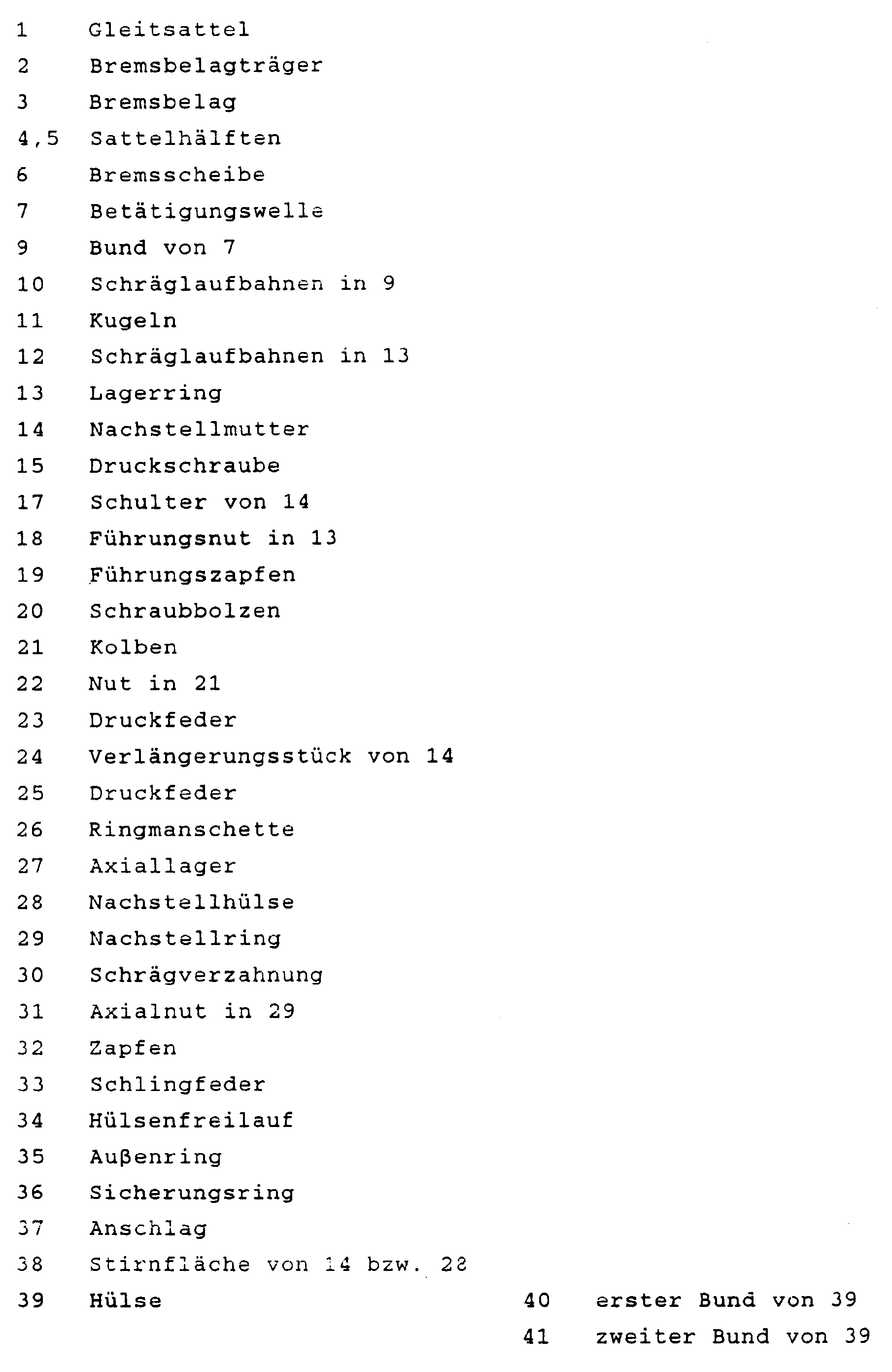

## Patentansprüche

1. Automatische Nachstelleinrichtung für eine mechanisch betätigte Scheibenbremse mit einem quer zur Bremsscheibe (6) schiebbar gelagerten Gleitsattel (1), der mit seinen beiden, jeweils einen Bremsbelagträger (2) mit Bremsbelag (3) aufweisenden Sattelhälften (4,5) die Bremsscheibe (6) übergreift, mit einer in einer Sattelhälfte drehbar gelagerten Betätigungswelle (7), die an ihrem büchsenförmig auslaufenden Ende einen radial vorstehenden Bund (9) aufweist, der an seiner einen Seite mit Schräglaufbahnen (10) zur Aufnahme von Kugeln (11) versehen ist, die mit Schräglaufbahnen (12) an einem Lagerring (13) korrespondieren und dazu dienen, die Drehbewegung der Betätigungswelle in eine axiale Bewegung einer mit dem Kolben (21) drehfest verbundenen Druckschraube (15) umzuwandeln, wobei sich die Betätigungswelle (7) zur Sicherung gegen axiale Verschiebung auf derjenigen Seite des Bundes (9), die von den Schräglaufbahnen (10) abgewandt ist, über ein Axiallager (27) am Gleitsattel abstützt, der Lagerring (13) in Bezug auf den Bremssattel axial verschiebbar, jedoch gegen Drehung gesichert ist und sich an einer hülsenförmig ausgebildeten Nachstellmutter (14) abstützt, in die die Druckschraube (15) eingeschraubt ist und die mit einem Verlängerungsstück (24) drehfest verbunden ist, das die Betätigungswelle (7) koaxial durchsetzt, einem Nachstellring (29), der relativ zum Verlängerungsstück (24) der Nachstellmutter (14) drehbar gelagert ist, wobei der Nachstellring (29) oder die Betätigungswelle (7) einen radialen Zapfen (32) aufweist, der in eine Nut der Betätigungswelle (7) oder des Nachstellrings (24) eingreift, einer Nachstellhülse (28), die auf dem Verlängerungsstück (24) angeordnet ist, wobei der Nachstellring (29) und die Nachstellhülse (28) an den einander zugekehrten Stirnseiten Schrägverzahnungen (30) aufweisen, wobei sich eines der beiden eine Schrägverzahnung aufweisenden Nachstellteile (28,29) an einem Bund der Nachstellmutter (14) abstützt, mit einem Federbauteil (23), das sich an dem anderen Nachstellteil abstützt, um die beiden Schrägverzahnungen (30) in Eingriff zu halten, mit einer in dem Kraftfluß vom Nachstellring (29) zu der Nachstellmutter (14) angeordneten Richtungskupplung, die beim Verdrehen der Betätigungswelle (7) in Bremsbetätigungsrichtung wirksam ist, und mit einer Drehmomentbegrenzungseinrichtung, die das vom Nachstellring (29) auf die Nachstellmutter (14) übertragbare Drehmoment begrenzt, dadurch **gekennzeichnet,** daß die Nachstellhülse (28) auf dem Verlängerungsstück (24) der Nachstellmutter (14) drehbar gelagert ist und sich an einem Bund derselben abstützt, daß sich das Federbauteil (23) am Nachstellring (29) abstützt, daß die Nachstellhülse (28) über eine Nachstellkupplung (33;34) mit der Nachstellmutter (14) verbunden ist, daß die in dem Nachstellring (29) oder in der Betätigungswelle (7) ausgebildete Nut eine Axialnut (31) ist und daß die an den Stirnseiten der Nachstellhülse (28) und des Nachstellrings (29) angeordneten Schrägverzahnungen (30) in Bremsbetätigungsrichtung unter Kompression des Federbauteils (23) ein gegenseitiges Überspringen ermöglichen.

2. Nachstelleinrichtung nach Anspruch 1, dadurch **gekennzeichnet,** daß die Richtungskupplung von einer Schlingfeder (33) gebildet wird.

3. Nachstelleinrichtung nach Anspruch 1, dadurch **gekennzeichnet,** daß die Richtungskupplung von einem Hülsenfreilauf (34) gebildet wird.

4. Nachstelleinrichtung nach einem der Ansprüche 1 bis 3, dadurch **gekennzeichnet,** daß der Nachstellring (29) unmittelbar auf dem Verlängerungsstück (24) der Nachstellmutter (14) drehbar gelagert ist und daß sich das Federbauteil (23) an dem Verlängerungsstück (24) der Nachstellmutter (14) abstützt.

5. Nachstelleinrichtung nach einem der Ansprüche 1 bis 3, dadurch **gekennzeichnet,** daß die Nachstellhülse (28) mit einer Verlängerung versehen ist, die mit einem Anschlag (37) auf dem Verlängerungsstück (24) der Nachstellmutter (14) axial positioniert ist, daß der Nachstellring (29) auf der Verlängerung der Nachstellhülse (28) drehbar und axial verschiebbar gelagert ist und daß sich das Federbauteil (23) an einer Stirnfläche (36,41) der Verlängerung der Nachstellhülse (28) abstützt.

6. Nachstelleinrichtung nach Anspruch 5, dadurch **gekennzeichnet,** daß die Verlängerung mit der Nachstellhülse (28) einstückig verbunden ist und daß die Stirnfläche der Verlängerung von einem Sicherungsring (36) gebildet ist.

7. Nachstelleinrichtung nach Anspruch 5, dadurch **gekennzeichnet,** daß die Verlängerung der Nachstellhülse (28) eine gesonderte Hülse (39) ist, die mit einem ersten Bund (40) die Nachstellhülse (28) hintergreift, und daß die Stirnfläche der Verlängerung von einem zweiten Bund (41) der Hülse (39) gebildet ist.

## Claims

1. An automatic adjusting device for a mechanically operated disc brake, with a sliding caliper (1) mounted so that it can slide transversely to the brake disc (6), the two caliper halves (4, 5) of which caliper, each having a brake pad support (2) with a brake pad (3), engage over the brake disc (6); with an operating spindle (7) rotatably mounted in one caliper half, which operating spindle has a radially projecting collar (9) on its end which runs out in the form of a bush, which collar is provided on one of its sides with slanting raceways (10), for receiving balls (11), which correspond to slanting raceways (12) on a bearing ring (13) which serve to convert the rotational movement of the operating spindle into an axial movement of a pressure screw (15) attached rotationally fixed to the piston (21), wherein to secure it against axial displacement the operating spindle (7) is supported, via an axial bearing (27) on the sliding caliper, on that side of the collar (9) which is remote from the slanting raceways (10), the bearing ring (13) is axially displaceable with respect to the brake caliper but is secured against rotation and is supported on an adjusting nut (14) of sleeve-shaped construction into which the pressure screw (15) is screwed and which is attached rotationally fixed to an extension piece (24) which passes coaxially through the operating spindle (7); with an adjusting ring (29) which is mounted so that it can rotate in relation to the extension piece (24) of the adjusting nut (14), wherein the adjusting ring (29) or the operating spindle (7) has a radial peg (32) which engages in a groove in the operating spindle (7) or the adjusting ring (29); with an adjusting sleeve (28) which is disposed on the extension piece (24), wherein the adjusting ring (29) and the adjusting sleeve (28) have slanting serrations (30) on their faces which face each other, wherein one of the two adjusting parts (28, 29) which have slanting serrations is supported on a collar on the adjusting nut (14); with a spring component (23) which is supported on the other adjusting part in order to hold the two slanting serrations (30) in engagement; with a directional clutch which is disposed in the path of force from the adjusting ring (29) and the adjusting nut (14) and which is effective when the operating spindle (7) turns in the direction of operation of the brake; and with a torque limiting device which limits the torque which can be transmitted from the adjusting ring (29) to the adjusting nut (14), characterised in that the adjusting sleeve (28) is rotatably mounted on the extension piece (24) of the adjusting nut (14) and is itself supported on a collar, that the spring component (23) is supported on the adjusting ring (29), that the adjusting sleeve (28) is connected to the adjusting nut (14) via an adjusting clutch (33; 34), that the groove formed in the adjusting ring (29) or in the operating spindle (7) is an axial groove (31), and that the slanting serrations (30) disposed on the faces of the adjusting sleeve (28) and of the adjusting ring (29) permit mutual skipping in the direction of operation of the brake with the spring component (23) compressed.

2. An adjusting device according to claim 1, characterised in that the directional clutch is formed from a wrap spring (33).

3. An adjusting device according to claim 1, characterised in that the directional clutch is formed from a sleeve-type freewheel (34).

4. An adjusting device according to any one of claims 1 to 3, characterised in that the adjusting ring (29) is rotatably mounted directly on the extension piece (24) of the adjusting nut (14), and that the spring component (23) is supported on the extension piece (24) of the adjusting nut (14).

5. An adjusting device according to any one of claims 1 to 3, characterised in that the adjusting sleeve (28) is provided with an extension which is axially positioned by means of a stop (37) on the extension piece (24) of the adjusting nut (14), that the adjusting ring (29) is rotatably and axially displaceably mounted on the extension of the adjusting sleeve (28), and that the spring component (23) is supported on an end face (31, 41) on the extension of the adjusting sleeve (28).

6. An adjusting device according to claim 5, characterised in that the extension is attached to the adjusting sleeve (28) as one piece and that the end face of the extension is formed from a locking ring (36).

7. An adjusting device according to claim 5, characterised in that the extension of the adjusting sleeve (28) is a separate sleeve (39), a first collar (40) of which engages behind the adjusting sleeve (28), and that the end face of the extension is formed from a second collar (41) of the sleeve (39).

## Revendications

1. Système automatique de rattrapage pour un frein à disque à commande mécanique comportant un étrier coulissant (1) installé perpendiculairement par rapport au disque de frein (6), et qui vient en prise, par ses deux demi-étriers (4-5) supportant chacun un support de garniture (2) et une garniture (3), avec le disque de frein (6),
un arbre de commande (7), monté rotatif dans un demi-étrier cet arbre portant à son extrémité, qui se prolonge en forme de douille, une collerette (9) qui, d'un côté, présente des chemins de roulement obliques (10) destinés à recevoir des billes (11) correspondant à d'autre chemins de roulement obliques (12) prévus sur un anneau formant palier (13), le tout réalisant la transformation du mouvement de rotation de l'arbre en un mouvement axial d'une vis de pression (15) solidaire de piston (21),
l'arbre de commande (7) étant assuré contre un déplacement axial sur le côté de sa collerette (9) qui est opposé à son chemin de roulement oblique (10), par un palier axial (27) porté par l'étrier,
l'anneau formant palier (13) étant mobile axialement par rapport à l'étrier mais étant assuré contre un mouvement de rotation, et étant en appui sur un écrou de rattrapage (14) en forme de douille, dans lequel la vis de pression (15) est vissée, et qui est fixé sans rotation possible à une rallonge (24) laquelle est contenue coaxialement dans l'arbre de commande (7) ;
un anneau de rattrapage (29) étant monté rotatif par rapport à la rallonge (24) de l'écrou de rattrapage (14),
l'anneau de rattrapage (29) ou l'arbre de commande (7) portant un tourillon radial (32) qui pénètre dans une rainure de l'arbre de commande (7) ou de l'anneau de rattrapage (29), et est associé à une gaine de rattrapage (28) se trouvant sur la rallonge (24),
l'anneau de rattrapage (29) et la gaine de rattrapage (28) portant en leurs parties frontales tournées l'une vers l'autre, des dentures obliques, l'une de ces deux pièces de rattrapage (28-29) portant des dentures obliques s'appuyant sur une collerette de l'écrou de rattrapage (14); une pièce à ressort (23) s'appuyant sur l'autre pièce de rattrapage pour maintenir les dentures obliques (30) en prise, avec un couplage de direction disposé dans le flux de force allant de l'anneau de rattrapage (29) vers l'écrou de rattrapage (14), ce couplage étant efficace dans le sens de commande du frein lors de la rotation de l'arbre de commande (7),
et un dispositif limiteur de couple qui limite le couple de rotation qui peut être transmis de l'anneau de rattrapage (29) à l'écrou de rattrapage (14),
caractérisé en ce que la gaine de rattrapage (28) est montée à rotation sur la rallonge (24) de l'écrou de rattrapage (14) et s'appuie sur une collerette de ce dernier ;
en ce que la pièce à ressort (23) s'appuie sur l'anneau de rattrapage (29),
en ce que la gaine de rattrapage (28) est liée à l'écrou de rattrapage (14) par le biais d'un accouplement de rattrapage (33-34),
en ce que la rainure (31) prévue dans l'anneau de rattrapage (29) ou l'arbre de commande (7) est une rainure axiale,
et en ce que les dentures obliques (30) prévues sur les faces frontales de la gaine (28) et de l'anneau (29) de rattrapage permettent un saut relatif dans la direction de la commande de freinage sous une compression de la pièce à ressort (23).

2. Dispositif de rattrapage selon la revendication 1, caractérisé en ce que l'accouplement de direction est produit par un ressort enroulé (33).

3. Dispositif de rattrapage selon la revendication 1, caractérisé en ce que la direction d'accouplement sera produite par une roue libre de douille (34).

4. Dispositif de rattrapage selon l'une des revendications 1 à 3, caractérisé en ce que l'anneau de réglage (29) est monté en rotation directement sur la rallonge (24) de l'écrou de rattrapage (14), et en ce que la pièce à ressort (23) s'appuie sur la rallonge (24) de l'écrou de rattrapage (14).

5. Dispositif de rattrapage selon l'une des revendications 1 à 3, caractérisé en ce que la gaine de rattrapage est munie d'un prolongement positionné axialement par une butée (37) sur la rallonge (24) de l'écrou de réglage (14),
en ce que l'anneau de rattrapage (29) est monté à rotation et coulissement axial sur le prolongement de la gaine de réglage (28)
et en ce que la pièce à ressort (23) s'appuie sur une face frontale (36, 41) du prolongement de la gaine de rattrapage (28).

6. Dispositif de rattrapage selon la revendication 5, caractérisé en ce que le prolongement et la gaine de rattrapage (28) sont d'une seule pièce, et que la face frontale du prolongement est constituée d'un circlip (36).

7. Dispositif de rattrapage selon la revendication 5, caractérisé en ce que le prolongement de la gaine de rattrapage (28) est constitué par une douille spéciale (39) qui prend par derrière la gaine de rattrapage (28) par une première collerette (40), et en ce que la partie frontale du prolongement est formée par une deuxième collerette (41) de la douille (39).
